# EUROPEAN PATENT APPLICATION

(11) **EP 4 382 570 A1**
(43) Date of publication of application: **12.06.2024**
(21) Application number: 23855069.3
(22) Date of filing: 27.07.2023
(51) Int. Cl.: C08L 69/00, C08K 7/14, C08K 5/521, C08K 5/5399, C08G 64/18, C08G 64/30

(54) **POLYCARBONATE RESIN COMPOSITION, PREPARATION METHOD THEREFOR, AND MOLDED ARTICLE COMPRISING SAME**

(30) Priority: 19.08.2022 KR 20220104189; 26.07.2023 KR 20230097211
(71) Applicant: LG Chem, Ltd., Yeongdeungpo-gu Seoul 07336 (KR)
(72) Inventor: LEE, Su Kyoung, Daejeon 34122 (KR); KIM, Young Wan, Daejeon 34122 (KR); YANG, Hee Chan, Daejeon 34122 (KR); LEE, Ryul, Daejeon 34122 (KR); KIM, Minsu, Daejeon 34122 (KR); CHOE, Woosoo, Daejeon 34122 (KR)
(74) Representative: Goddar, Heinz J.
(86) International application number: PCT/KR2023/010899
(87) International publication number: WO 2024/039099

(57) **Abstract**

The present invention relates to a polycarbonate resin composition, a method of preparing the same, and a molded article including the same. More particularly, the present invention relates to a polycarbonate resin composition including 20 to 75 % by weight of a polycarbonate (A-1) having a melt index (300 °C, 1.2 kg) of 15 to 25 g/10 min; 5 to 25 % by weight of a polysiloxane-polycarbonate copolymer (B); 5 to 45 % by weight of glass fiber (C); 2 to 12 % by weight of a liquid phosphorus-based flame retardant (D); and 1 to 7 % by weight of a phosphazene compound (E), a method of preparing the polycarbonate resin composition, and a molded article including the polycarbonate resin composition.

According to the present invention, the present invention has an effect of a polycarbonate resin composition having a high recycling rate by including a high content of a post-consumer recycled polycarbonate and having excellent impact resistance, heat resistance, and flame retardancy, a method of preparing the polycarbonate resin composition, and a molded article including the polycarbonate resin composition.

## Description

### [Technical Field]

### [Cross-Reference to Related Applications]

This application claims priority to Korean Patent Application No. 10-2022-0104189, filed on August 19, 2022, and Korean Patent Application No. 10-2023-0097211, re-filed on July 26, 2023, based on the priority of the above patent, in the Korean Intellectual Property Office, the disclosures of each of which are incorporated herein by reference.

The present invention relates to a polycarbonate resin composition, a method of preparing the same, and a molded article including the same. More particularly, the present invention relates to a polycarbonate resin composition containing a high content of a post-consumer recycled polycarbonate obtained by recycling plastics used and discarded by consumers and having excellent flame retardancy, impact resistance, and heat resistance, a method of preparing the polycarbonate resin composition, and a molded article including the polycarbonate resin composition.

### [Background Art]

Plastics have been used in various fields for a long time due to various advantages including excellent productivity, weight reduction, and heat insulation, but due to structural characteristics thereof, plastics are not easily decomposed, causing environmental pollution when buried. Various studies are being conducted to solve these problems, and recycling is attracting attention thereamong. Recycling of waste plastics can solve the problem of environmental pollution and has the effect of significantly reducing costs.

The IT, electrical/electronic, and automotive industries are attempting to recycle plastics used and discarded by consumers in line with the eco-friendly trend. However, the mechanical properties of recycled plastics are inferior to those of conventional plastics, limiting use thereof.

Among various types of plastics, a polycarbonate is an amorphous and thermoplastic resin, has high impact resistance at room temperature, and has excellent thermal stability and transparency and high dimensional stability. Due to these advantages, polycarbonates are widely used in various industrial fields such as building materials, exterior materials and parts of electrical and electronic products, automobile parts, and optical parts.

However, since polycarbonates have low impact resistance at low temperatures and have no inherent flame-retardant properties, there is a risk of fire when applied to electrical/electronic and automotive devices. To solve this problem, when a flame retardant is added to a polycarbonate, mechanical properties such as impact resistance and heat resistance deteriorate.

In addition, when a post-consumer recycled polycarbonate is included in a thermoplastic resin composition, impact resistance and heat resistance are further degraded. Thus, the post-consumer recycled polycarbonate is used in a small amount.

Therefore, there is a need to develop a thermoplastic resin composition capable of increasing the ratio of a recycled resin by including a high content of a post-consumer recycled polycarbonate and imparting excellent flame retardancy, impact resistance, and heat resistance.

### [Related Art Documents]

### [Patent Documents]

KR 2011-0126425 A

### [Disclosure]

### [Technical Problem]

Therefore, the present invention has been made in view of the above problems, and it is one object of the present invention to provide a polycarbonate resin composition having excellent flame retardancy, impact resistance, and heat resistance while containing a high content of a post-consumer recycled polycarbonate.

It is another object of the present invention to provide a method of preparing the polycarbonate resin composition.

It is yet another object of the present invention to provide a molded article including the polycarbonate resin composition.

The above and other objects can be accomplished by the present invention described below.

### [Technical Solution]

In accordance with one aspect of the present invention, provided is a polycarbonate resin composition including 20 to 75 % by weight of a polycarbonate (A-1) having a melt index (300 °C, 1.2 kg) of 15 to 25 g/10 min; 5 to 25 % by weight of a polysiloxane-polycarbonate copolymer (B); 5 to 45 % by weight of glass fiber (C); 2 to 12 % by weight of a liquid phosphorus-based flame retardant (D); and 1 to 7 % by weight of a phosphazene compound (E).

The polycarbonate resin composition may preferably include 20 to 75 % by weight of a polycarbonate (A-1) having a melt index (300 °C, 1.2 kg) of 15 to 25 g/10 min; 0 to 50 % by weight of a polycarbonate (A-2) having a melt index (300 °C, 1.2 kg) of 5 g/10 min or more and less than 15 g/10 min; 5 to 25 % by weight of a polysiloxane-polycarbonate copolymer (B); 5 to 45 % by weight of glass fiber (C); 2 to 12 % by weight of a liquid phosphorus-based flame retardant (D); and 1 to 7 % by weight of a phosphazene compound (E).

The polycarbonate resin composition may preferably include 20 to 75 % by weight of a polycarbonate (A-1) having a melt index (300 °C, 1.2 kg) of 15 to 25 g/10 min; 1 to 50 % by weight of a polycarbonate (A-2) having a melt index (300 °C, 1.2 kg) of 5 g/10 min or more and less than 15 g/10 min; 5 to 25 % by weight of a polysiloxane-polycarbonate copolymer (B); 5 to 45 % by weight of glass fiber (C); 2 to 12 % by weight of a liquid phosphorus-based flame retardant (D); and 1 to 7 % by weight of a phosphazene compound (E).

The polycarbonate (A-1) may preferably be a post-consumer recycled polycarbonate, and the polycarbonate (A-2) may preferably be a general polycarbonate.

The polysiloxane-polycarbonate copolymer (B) may preferably include an aromatic diol compound, a carbonate precursor, and a polysiloxane.

The polysiloxane-polycarbonate copolymer (B) may preferably include an aromatic polycarbonate-based first repeat unit represented by Chemical Formula 1 below; and an aromatic polycarbonate-based second repeat unit represented by Chemical Formula 2 below and having one or more siloxane bonds, or include a repeat unit represented by Chemical Formula 3 below. 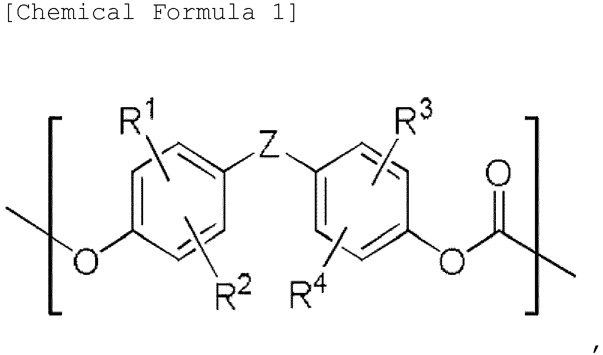 wherein R¹ to R⁴ are each independently selected from hydrogen; C₁₋₁₀ alkyl; C₁₋₁₀ alkoxy; and a halogen, and Z is selected from unsubstituted C₁₋₁₀ alkylene or C₁₋₁₀ alkylene substituted with C₁₋₆ alkyl or C₆₋₂₀ aryl; unsubstituted C₃₋₁₅ cycloalkylene or C₃₋₁₅ cycloalkylene substituted with C₁₋₁₀ alkyl; oxygen; S; SO; SO₂; and CO. 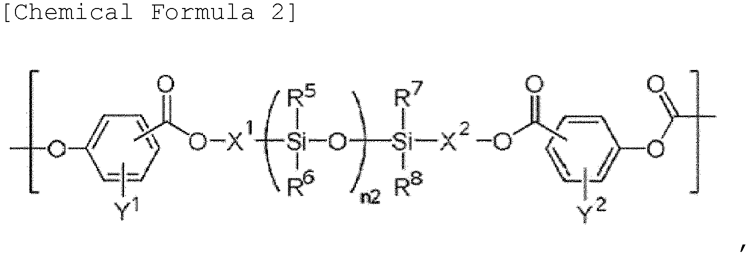 wherein X¹ and X² are each independently C₁₋₁₀ alkylene, Y¹ and Y² are each independently selected from hydrogen; C₁₋₆ alkyl; a halogen; a hydroxy group; a C₁₋₆ alkoxy group; and a C₆₋₂₀ aryl group, R⁵ to R⁸ are each independently selected from hydrogen; an unsubstituted C₁₋₁₀ alkoxy group or a C₁₋₁₀ alkoxy group substituted with oxiranyl; C₁₋₁₅ alkyl substituted with C₆₋₂₀ aryl; a halogen; C₁₋₁₀ alkoxy; allyl; C₁₋₁₀ haloalkyl; and C₆₋₂₀ aryl, and n2 is an integer from 30 to 120. 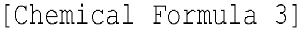 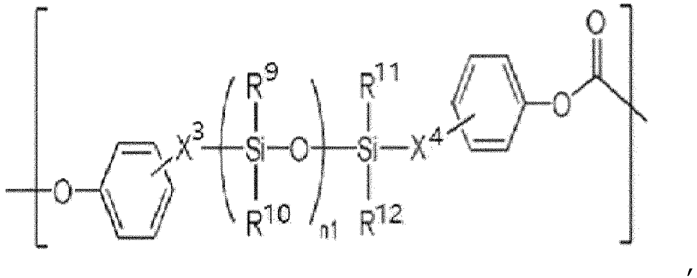 wherein X³ and X⁴ are each independently C₁₋₁₀ alkylene, R⁹ to R¹² are each independently hydrogen; unsubstituted C₁₋₁₀ alkoxy or C₁₋₁₀ alkoxy substituted with oxiranyl; C₁₋₁₅ alkyl substituted with C₆₋₂₀ aryl; a halogen; C₁₋₁₀ alkoxy; allyl; C₁₋₁₀ haloalkyl; or C₆₋₂₀ aryl, and n1 is an integer from 30 to 120.

The polysiloxane-polycarbonate copolymer (B) may preferably have siloxane domains having an average size of 20 nm or more.

The glass fiber (C) may preferably have an average length of 1 to 15 mm, and a cross section thereof may preferably have an average transverse length of 15 to 45 µm and an average longitudinal length of 2 to 15 µm.

The liquid phosphorus-based flame retardant (D) may preferably include one or more selected from the group consisting of bisphenol-A bis(diphenyl phosphate), triphenyl phosphate, and resorcinol bis(diphenyl phosphate).

The phosphazene compound (E) may preferably include one or more selected from the group consisting of a cyclic phosphazene compound, an acyclic phosphazene compound, and a cross-linked phosphazene compound.

A weight ratio (D:E) of the liquid phosphorus-based flame retardant (D) to the phosphazene compound (E) may preferably be 1.2:1 to 3.0:1.

The polycarbonate resin composition may preferably have an Izod impact strength of 11 kgf-cm/cm or more as measured at room temperature using a notched specimen having a thickness of 3.2 mm according to ASTM D256.

The polycarbonate resin composition may preferably have a heat deflection temperature of 97 °C or higher as measured under a load of 18.6 kg using a specimen having a thickness of 6.4 mm according to ASTM D648.

The polycarbonate resin composition may preferably have a flame retardancy of grade V-0 or higher as measured using a specimen having a thickness of 0.8 mm according to a UL94 V test.

In accordance with another aspect of the present invention, provided is a method of preparing a polycarbonate resin composition, the method including kneading and extruding 20 to 75 % by weight of a polycarbonate (A-1) having a melt index (300 °C, 1.2 kg) of 15 to 25 g/10 min, 0 to 50 % by weight of a polycarbonate (A-2) having a melt index (300 °C, 1.2 kg) of 5 g/10 min or more and less than 15 g/10 min, 5 to 25 % by weight of a polysiloxane-polycarbonate copolymer (B), 5 to 45 % by weight of glass fiber (C), 2 to 12 % by weight of a liquid phosphorus-based flame retardant (D), and 1 to 7 % by weight of a phosphazene compound (E) at 200 to 350 °C and 100 to 400 rpm.

The method of preparing a polycarbonate resin composition may preferably include kneading and extruding 20 to 75 % by weight of a polycarbonate (A-1) having a melt index (300 °C, 1.2 kg) of 15 to 25 g/10 min, 1 to 50 % by weight of a polycarbonate (A-2) having a melt index (300 °C, 1.2 kg) of 5 g/10 min or more and less than 15 g/10 min, 5 to 25 % by weight of a polysiloxane-polycarbonate copolymer (B), 5 to 45 % by weight of glass fiber (C), 2 to 12 % by weight of a liquid phosphorus-based flame retardant (D), and 1 to 7 % by weight of a phosphazene compound (E) at 200 to 350 °C and 100 to 400 rpm.

In accordance with yet another aspect of the present invention, provided is a molded article including the polycarbonate resin composition.

### [Advantageous Effects]

According to the present invention, the present invention has an effect of providing a polycarbonate resin composition having excellent flame retardancy, heat resistance, and impact resistance while containing a high content of a post-consumer recycled polycarbonate.

In addition, since a post-consumer recycled polycarbonate is contained in a high content in the polycarbonate resin composition according to the present invention, the content ratio of waste plastics used in the preparation of the polycarbonate resin composition can be increased, thereby providing advantages of being eco-friendly, reducing greenhouse gases, and saving energy.

### [Best Mode]

Hereinafter, a polycarbonate resin composition of the present invention will be described in detail.

The present inventors confirmed that, when a high content of a post-consumer recycled polycarbonate was included in a polycarbonate, and a combination of a liquid phosphorus-based flame retardant and a phosphazene compound, a polysiloxane-polycarbonate copolymer, and glass fiber were included in a predetermined content ratio, flame retardancy, heat resistance, and impact strength were excellent. Based on these results, the present inventors conducted further studies to complete the present invention.

The polycarbonate resin composition according to the present invention is described in detail as follows.

The polycarbonate resin composition of the present invention includes 20 to 75 % by weight of a polycarbonate (A-1) having a melt index (300 °C, 1.2 kg) of 15 to 25 g/10 min; 5 to 25 % by weight of a polysiloxane-polycarbonate copolymer (B); 5 to 45 % by weight of glass fiber (C); 2 to 12 % by weight of a liquid phosphorus-based flame retardant (D); and 1 to 7 % by weight of a phosphazene compound (E) . In this case, while including a high content of a recycled polycarbonate, excellent flame retardancy, impact resistance, and heat resistance may be implemented, and eco-friendliness may be achieved.

### A-1) Polycarbonate having melt index (300 °C, 1.2 kg) of 15 to 25 g/10 min

For example, based on a total weight of the polycarbonate resin composition, the polycarbonate (A-1) may be included in an amount of 20 to 75 % by weight, preferably 25 to 72 % by weight, more preferably 28 to 72 % by weight, still more preferably 30 to 62 % by weight. Within this range, due to a high recycling rate, eco-friendliness may be obtained, and water and energy consumption may be reduced. In addition, flame retardancy, heat resistance, and impact resistance may be excellent.

The polycarbonate (A-1) may have a melt index of preferably 17 to 22 g/10 min, more preferably 19 to 21 g/10 min. Within this range, physical property balance and impact resistance may be excellent.

In the present disclosure, the melt index is measured at 300 °C under a load of 1.2 kg according to ASTM D1238.

For example, the polycarbonate (A-1) may have a polydispersity index of greater than 2.75, preferably 2.8 or more, more preferably 2.8 to 3.2, still more preferably 2.8 to 3.0. Within this range, mechanical properties and physical property balance may be excellent.

In the present disclosure, the polydispersity index refers to the distribution of molecular weights and is calculated by dividing a weight average molecular weight by a number average molecular weight. A large polydispersity index indicates that the standard deviation of a molecular weight distribution is large, i.e., that there are many molecular weights greater or less than a weight average molecular weight.

In the present disclosure, unless otherwise defined, the weight average molecular weight and the number average molecular weight may be measured using tetrahydrofuran (THF) as an eluate through gel permeation chromatography (GPC, Waters Breeze). In this case, the weight average molecular weight or the number average molecular weight is obtained as a relative value to a polystyrene (PS) standard sample. Specific measurement conditions are as follows: solvent: THF, column temperature: 40 °C, flow rate: 0.3 ml/min, sample concentration: 20 mg/ml, injection amount: 5 µl, column model: 1×PLgel 10 µm MiniMix-B (250×4.6 mm) + 1×PLgel 10 µm MiniMix-B (250×4.6 mm) + 1×PLgel 10 µm MiniMix-B Guard (50×4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the polycarbonate (A-1) may have a weight average molecular weight of 20,000 g/mol or more and less than 28,000 g/mol, preferably 22,000 to 27,000 g/mol, more preferably 24,000 to 27,000 g/mol. Within this range, mechanical properties and physical property balance may be excellent.

For example, the polycarbonate (A-1) may have a heat deflection temperature of 124 °C or higher, preferably 127 °C or higher, more preferably 130 °C or higher, still more preferably 130 to 140 °C as measured according to ASTM D648. Within this range, mechanical properties and physical property balance may be excellent.

In the present disclosure, the heat deflection temperature may be measured under a load of 18.6 kg using a specimen having a thickness of 6.4 mm according to ASTM D648.

For example, the polycarbonate (A-1) may be a post-consumer recycled polycarbonate. In this case, by recycling waste plastics, eco-friendliness may be obtained, energy and water may be saved, and carbon emission may be reduced.

In the present disclosure, a post-consumer recycled polycarbonate commonly accepted in the art to which the present invention pertains may be used in the present invention without particular limitation as long as the post-consumer recycled polycarbonate follows the definition of the present invention. For example, the post-consumer recycled polycarbonate is a polycarbonate recycled from collected waste plastics. As a specific example, the post-consumer recycled polycarbonate refers to a raw material obtained by sorting, washing, and crushing collected waste plastics. In addition, when necessary, the post-consumer recycled polycarbonate may be processed into pellets through an extrusion process. In this case, no additional processing such as additional purification is required. Since the post-consumer recycled polycarbonate has been processed one or more times, additives such as a colorant, a lubricant, and/or a release agent may be included.

For example, the post-consumer recycled polycarbonate may also be referred to as a recycled polycarbonate.

For example, the polycarbonate (A-1) may be a resin obtained by polymerizing an aromatic diol compound and a carbonate precursor.

For example, the aromatic diol compound may include one or more selected from the group consisting of bis (4-hydroxyphenyl)methane, bis(4-hydroxyphenyl)ether, bis(4-hydroxyphenyl)sulfone, bis(4-hydroxyphenyl) sulfoxide, bis(4-hydroxyphenyl) sulfide, bis(4-hydroxyphenyl) ketone, 1,1-bis(4-hydroxyphenyl)ethane, 2,2-bis(4-hydroxyphenyl)propane (bisphenol A; BPA), 2,2-bis(4-hydroxyphenyl)butane, 1,1-bis(4-hydroxyphenyl)cyclohexane (bisphenol Z; BPZ), 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and α,ω-bis[3-(o-hydroxyphenyl)propyl]polydimethylsiloxane, preferably bisphenol A.

For example, the carbonate precursor may include one or more selected from the group consisting of dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, bis(diphenyl) carbonate, carbonyl chloride (phosgene), triphosgene, diphosgene, carbonyl bromide, and bishaloformate. Considering production efficiency and physical properties, triphosgene, phosgene, or a mixture thereof is preferably used.

As a specific example, the polycarbonate formed by polymerizing the aromatic diol compound and the carbonate precursor includes a repeat unit represented by Chemical Formula 4 below.

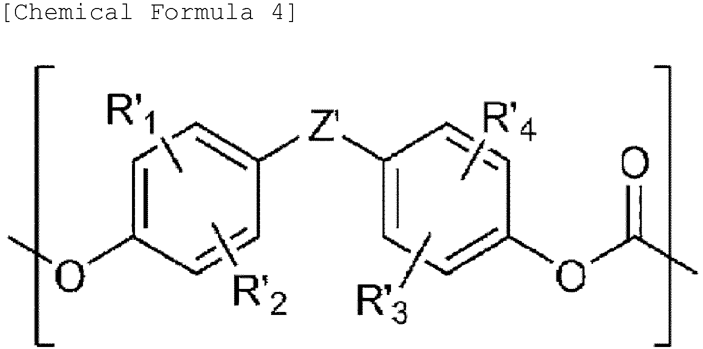

In Chemical Formula 4, R'₁ to R'₄ are each independently selected from hydrogen, C₁₋₁₀ alkyl, C₁₋₁₀ alkoxy, and a halogen, and Z' is selected from unsubstituted C₁₋₁₀ alkylene or C₁₋₁₀ alkylene substituted with C₁₋₆ alkyl or C₆₋₂₀ aryl; unsubstituted C₃₋₁₅ cycloalkylene or C₃₋₁₅ cycloalkylene substituted with C₁₋₁₀ alkyl; O; S; SO; SO₂; and CO.

Preferably, in Chemical Formula 4, R'₁ to R'₄ may each independently be hydrogen or C₁₋₃ alkyl, and Z' may be unsubstituted C₁₋₆ alkylene or C₁₋₆ alkylene substituted with methyl or phenyl.

For example, the polycarbonate (A-1) may include one or more selected from the group consisting of a linear polycarbonate, a branched polycarbonate, and a polyester carbonate copolymer, preferably a linear polycarbonate. In this case, fluidity may be improved, and appearance characteristics may be excellent.

The linear polycarbonate resin may preferably be a bisphenol-A polycarbonate, but the present invention is not limited thereto.

For example, as the polycarbonate (A-1), a commercially available product may be used as long as the product follows the definition of the present invention.

### A-2) Polycarbonate having melt index (300 °C, 1.2 kg) of 5 g/10 min or more and less than 15 g/10 min

For example, the polycarbonate (A-2) may have a melt index (300 °C, 1.2 kg) of 5 g/10 min or more and less than 15 g/10 min, preferably 7 to 12 g/10 min, more preferably 9 to 11 g/10 min. Within this range, mechanical properties and heat resistance may be excellent.

For example, the polycarbonate (A-2) may have a polydispersity index of 2.75 or less, preferably 2.6 or less, more preferably 2.5 or less, still more preferably 2.3 to 2.5. Within this range, mechanical properties and physical property balance may be excellent.

For example, the polycarbonate (A-2) may have a weight average molecular weight of 28,000 g/mol or more, preferably 29,000 g/mol or more, more preferably 30,000 g/mol or more, still more preferably 30,000 to 37,000 g/mol. Within this range, mechanical properties and physical property balance may be excellent.

For example, the polycarbonate (A-2) may have a heat deflection temperature of 124 °C or higher, preferably 127 °C or higher, more preferably 130 °C or higher, still more preferably 130 to 140 °C as measured according to ASTM D648. Within this range, mechanical properties and physical property balance may be excellent.

For example, the polycarbonate (A-2) may be a general polycarbonate.

In the present disclosure, a general polycarbonate commonly accepted in the art to which the present invention pertains may be used in the present invention without particular limitation as long as the general polycarbonate follows the definition of the present invention. The general polycarbonate contrasts with the post-consumer recycled polycarbonate of the present invention, and may be a polycarbonate that has not been subjected to molding processing such as injection after polymerization of monomers constituting the polycarbonate or a commercially available polycarbonate corresponding to the polycarbonate.

For example, the general polycarbonate may also be referred to as a virgin polycarbonate, a new polycarbonate, a fresh polycarbonate, or a non-recycled polycarbonate.

Preferably, monomers constituting the polycarbonate (A-2) may be selected within the same range as those mentioned in the polycarbonate (A-1).

For example, based on a total weight of the polycarbonate resin composition, the polycarbonate (A-2) may be included in an amount of 0 to 50 % by weight, preferably 1 to 50 % by weight, more preferably 7 to 45 % by weight, still more preferably 10 to 42 % by weight, still more preferably 15 to 42 % by weight. Within this range, impact resistance and heat resistance may be excellent.

### B) Polycarbonate-polysiloxane copolymer

For example, the polysiloxane-polycarbonate copolymer (B) may be obtained by polymerizing an aromatic diol compound, a carbonate precursor, and a polysiloxane. In this case, impact resistance may be improved.

In the present invention, the polysiloxane-polycarbonate copolymer (B) is distinguished from the polycarbonate (A-1) in that a polysiloxane is introduced into the polycarbonate main chain thereof.

For example, the aromatic diol compound and the carbonate precursor may be the same as those used in preparing the polycarbonate (A-1).

For example, the polysiloxane-polycarbonate copolymer (B) may be prepared by condensation polymerization of a polycarbonate and a polysiloxane or by interfacial polymerization of an aromatic diol compound, a carbonate precursor, and a polysiloxane, but the present invention is not limited thereto.

For example, the polysiloxane-polycarbonate copolymer (B) includes an aromatic polycarbonate-based first repeat unit represented by Chemical Formula 1 below; and an aromatic polycarbonate-based second repeat unit represented by Chemical Formula 2 below and having one or more siloxane bonds.

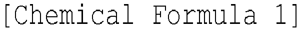

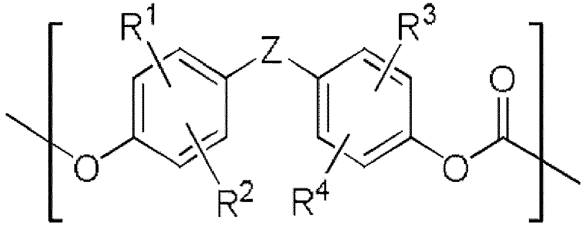

In Chemical Formula 1, R¹ to R⁴ are each independently selected from hydrogen; C₁₋₁₀ alkyl; C₁₋₁₀ alkoxy; and a halogen, and Z is selected from unsubstituted C₁₋₁₀ alkylene or C₁₋₁₀ alkylene substituted with C₁₋₆ alkyl or C₆₋₂₀ aryl; unsubstituted C₃₋₁₅ cycloalkylene or C₃₋₁₅ cycloalkylene substituted with C₁₋₁₀ alkyl; oxygen; S; SO; SO₂; and CO.

Preferably, in Chemical Formula 1, R₁ to R₄ may each independently be hydrogen or C₁₋₃ alkyl, and Z may be unsubstituted C₁₋₆ alkylene or C₁₋₆ alkylene substituted with methyl or phenyl.

Preferably, the first repeat unit represented by Chemical Formula 1 is obtained by polymerization of a bisphenol A, which is an aromatic diol compound, and triphosgene, which is a carbonate precursor, and is represented by Chemical Formula 1-1 below.

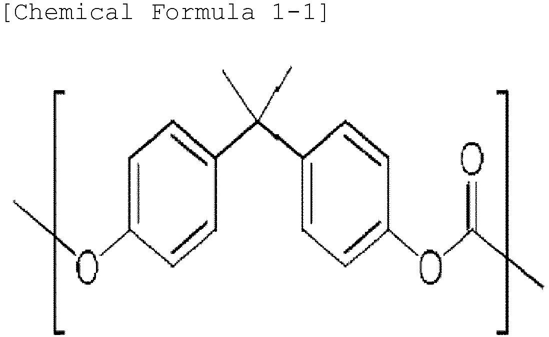

For example, based on 100 mol% of total repeat units in the polysiloxane-polycarbonate copolymer, the first repeat unit represented by Chemical Formula 1 may be included in an amount of 20 to 95 mol%, preferably 30 to 85 mol%, more preferably 40 to 80 mol%.

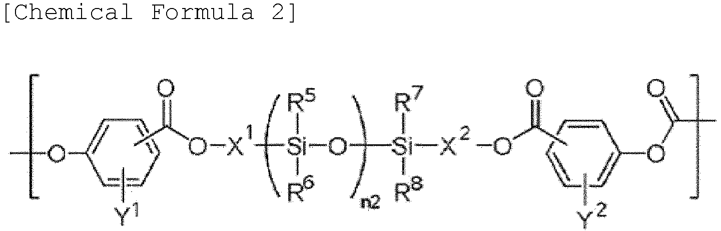

In Chemical Formula 2, X¹ and X² are each independently C₁₋₁₀ alkylene, Y¹ and Y² are each independently selected from hydrogen; C₁₋₆ alkyl; a halogen; a hydroxy group; a C₁₋₆ alkoxy group; and a C₆₋₂₀ aryl group, R⁵ to R⁸ are each independently selected from hydrogen; an unsubstituted C₁₋₁₀ alkoxy group or a C₁₋₁₀ alkoxy group substituted with oxiranyl; C₁₋₁₅ alkyl substituted with C₆₋₂₀ aryl; a halogen; C₁₋₁₀ alkoxy; allyl; C₁₋₁₀ haloalkyl; and C₆₋₂₀ aryl, and n2 is an integer from 30 to 120.

Preferably, in Chemical Formula 2, X¹ and X² may each independently be C₂₋₁₀ alkylene, more preferably C₂₋₆ alkylene, most preferably isobutylene, and Y¹ and Y² may each independently be hydrogen.

More preferably, in Chemical Formula 2, R⁵ to R⁸ may each independently be hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl.

More preferably, R⁵ to R⁸ may each independently be C₁₋₁₀ alkyl or C₁₋₆ alkyl, still more preferably C₁₋₃ alkyl, still more preferably methyl.

In addition, in Chemical Formula 2, n2 may be an integer from 30 to 120, preferably an integer from 34 to 110.

The repeat unit represented by Chemical Formula 2 is preferably represented by Chemical Formula 2-1 below.

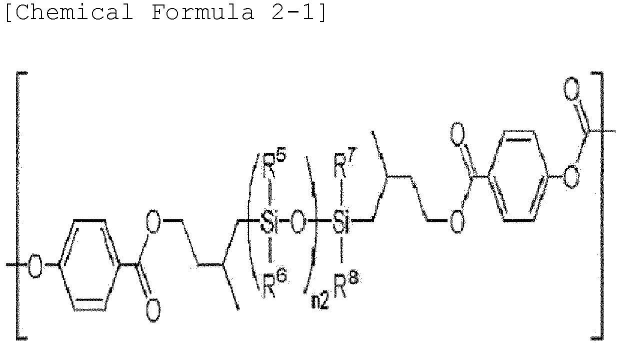

In Chemical Formula 2-1, R⁵ to R⁸ and n2 are the same as defined above.

For example, based on 100 mol% of total repeat units in the polysiloxane-polycarbonate copolymer, the second repeat unit represented by Chemical Formula 2 may be included in an amount of 5 to 80 mol%, preferably 15 to 70 mol%, more preferably 20 to 60 mol%.

Preferably, the polysiloxane-polycarbonate copolymer may further include a third repeat unit represented by Chemical Formula 3 below.

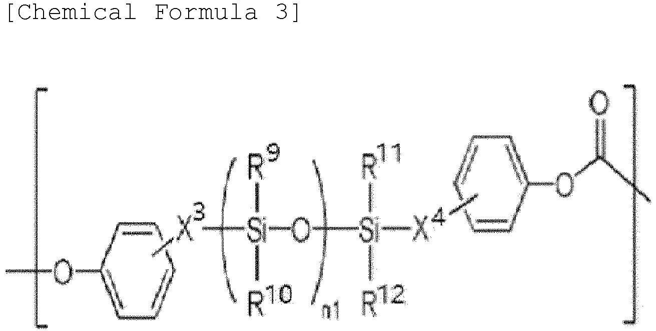

In Chemical Formula 3, X³ and X⁴ are each independently C₁₋₁₀ alkylene, R⁹ to R¹² are each independently hydrogen; unsubstituted C₁₋₁₀ alkoxy or C₁₋₁₀ alkoxy substituted with oxiranyl; C₁₋₁₅ alkyl substituted with C₆₋₂₀ aryl; a halogen; C₁₋₁₀ alkoxy; allyl; C₁₋₁₀ haloalkyl; or C₆₋₂₀ aryl, and n1 is an integer from 30 to 120.

Preferably, in Chemical Formula 3, X³ and X⁴ may each independently be C₂₋₁₀ alkylene, preferably C₂₋₄ alkylene, more preferably propane-1,3-diyl.

In Chemical Formula 3, R⁹ to R¹² may each independently be hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl.

Preferably, R⁹ to R¹² are each independently C₁₋₁₀ alkyl or C₁₋₆ alkyl, more preferably C₁₋₃ alkyl, still more preferably methyl.

In addition, in Chemical Formula 3, n1 is an integer from 30 to 120, preferably an integer from 34 to 110.

When the third repeat unit represented by Chemical Formula 3 is further included, the heat resistance and impact resistance of the composition may be further improved.

The third repeat unit represented by Chemical Formula 3 is preferably represented by Chemical Formula 3-1 below.

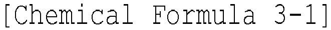

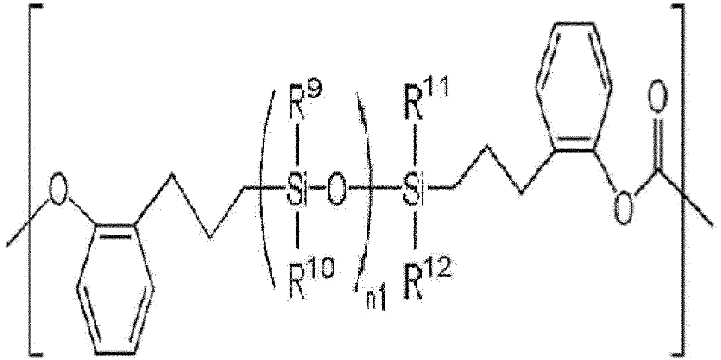

In Chemical Formula 3-1, R⁹ to R¹² and n1 are the same as defined above.

For example, based on 100 mol% in total of the first and second repeat units, the third repeat unit represented by Chemical Formula 3 may be further included in an amount of 1 to 30 mol%, preferably 3 to 25 mol%, more preferably 5 to 20 mol%.

For example, the polysiloxane-polycarbonate copolymer (B) may have a weight average molecular weight of 1,000 to 100,000 g/mol, preferably 5,000 to 70,000 g/mol, more preferably 5,000 to 50,000 g/mol. Within this range, processing and molding of the composition may be easy, and impact resistance and heat resistance may be satisfied at the same time.

For example, the polysiloxane-polycarbonate copolymer (B) may have siloxane domains having an average size of 20 nm or more, preferably 20 to 60 nm, more preferably 30 to 60 nm. Within this range, the siloxane domains of the polysiloxane-polycarbonate copolymer may play a role as an impact modifier such as rubber to greatly increase impact resistance.

In the present disclosure, the term "domain" means another unit chain dispersed in a matrix chain. In addition, the "average size of siloxane domains" refers to the average size of polysiloxane chains dispersed in polycarbonate chains. Specifically, the "average size of siloxane domains" may refer to the average size of polysiloxane chains, more specifically, polysiloxane aggregates, dispersed in polycarbonate chains as a matrix.

For example, in the present disclosure, the average size of siloxane domains may be measured by shape analysis using a microscope. As a specific example, the average size of siloxane domains may be measured at room temperature using a scanning electron microscope (SEM) or a transmission electron microscope (TEM). Preferably, when the average size of siloxane domains is measured, ten siloxane domains are randomly selected from an image taken using a microscope, the sizes thereof are measured, and an average value for the measured values is calculated.

For example, based on a total weight of the polycarbonate resin composition, the polysiloxane-polycarbonate copolymer (B) may be included in an amount of 5 to 25 % by weight, preferably 7 to 23 % by weight, more preferably 9 to 20 % by weight, still more preferably 9 to 16 % by weight. Within this range, physical property balance and impact resistance may be improved.

### C) Glass fiber

For example, based on a total weight of the polycarbonate resin composition, the glass fiber (C) may be included in an amount of 5 to 45 % by weight, preferably 7 to 45 % by weight, more preferably 7 to 40 % by weight, still more preferably 7 to 28 % by weight. Within this range, excellent heat resistance may be obtained while maintaining mechanical properties and processability at a high level.

For example, the glass fiber (C) may have an average length of 1 to 15 mm, preferably 1 to 10 mm, more preferably 1 to 7 mm, still more preferably 2 to 5 mm. Within this range, mechanical strength may be improved, and the appearance of a final product may be excellent.

For example, the cross section of the glass fiber (C) may have an average transverse length of 15 to 45 pm, preferably 20 to 35 pm, more preferably 25 to 30 µm. Within this range, fluidity and mechanical properties may be excellent.

For example, the cross section of the glass fiber (C) may have an average longitudinal length of 2 to 15 pm, preferably 2 to 12 pm, more preferably 4 to 10 µm. Within this range, fluidity and mechanical properties may be excellent.

For example, the cross section of the glass fiber (C) may have an aspect ratio of 1.5 to 5, preferably 2 to 4.7, more preferably 2.5 to 4.5, still more preferably 3 to 4.5, still more preferably 3.5 to 4.5. Within this range, fluidity and mechanical properties may be excellent. In addition, distortion of a final product may be reduced, thereby improving dimensional stability.

In the present disclosure, the aspect ratio of the cross section means the ratio of the horizontal length to the vertical length. When the aspect ratio is 1, the cross section has a circular shape, and when the aspect ratio exceeds 1, the cross section has an elliptical shape.

For example, the glass fiber (C) may be chopped glass fiber. In this case, compatibility may be excellent.

In the present disclosure, chopped glass fiber commonly used in the art to which the present invention pertains may be used in the present invention without particular limitation.

In the present disclosure, by using measurement methods commonly used in the art to which the present invention pertains, the average length of the glass fiber and the transverse and longitudinal lengths of the cross section may be measured. Specifically, the lengths of 30 strands may be measured by microscopic analysis, and the average value of the measured values may be calculated.

For example, the glass fiber (C) may be surface-treated with a silane-based compound or a urethane-based compound. Preferably, the glass fiber (C) may be surface-treated with one or more surface treatment agents selected from the group consisting of an amino silane-based compound, an epoxy silane-based compound, and a urethane-based compound, more preferably an epoxy silane-based compound. In this case, due to excellent dispersibility in a resin composition, mechanical strength may be improved.

For example, based on 100 % by weight in total (glass fiber + surface treatment agent) of the surface-treated glass fiber, the surface treatment agent may be included in an amount of 0.1 to 10 % by weight, preferably 0.1 to 5 % by weight, more preferably 0.1 to 3 % by weight, still more preferably 0.1 to 0.8 % by weight, still more preferably 0.2 to 0.5 % by weight. Within this range, mechanical properties, physical property balance, and the appearance of a final product may be excellent.

As the amino silane-based compound, an amino silane commonly used as a coating agent for glass fiber may be used without particular limitation. For example, the amino silane-based compound may include one or more selected from the group consisting of γ-glycidoxypropyl triethoxy silane, γ-glycidoxypropyl trimethoxy silane, γ-glycidoxypropyl methyldiethoxy silane, 3-mercaptopropyl trimethoxy silane, vinyltrimethoxy silane, vinyltriethoxy silane, γ-methacryloxypropyl trimethoxy silane, γ-methacryloxy propyl triethoxy silane, γ-aminopropyl trimethoxy silane, γ-aminopropyl triethoxy silane, 3-isocyanate propyltriethoxy silane, γ-acetoacetate propyl trimethoxy silane, acetoacetate propyl triethoxy silane, γ-cyanoacetyl trimethoxy silane, γ-cyanoacetyl triethoxy silane, and acetoxyaceto trimethoxy silane. In this case, mechanical properties, heat resistance, and the surface properties of an injection product may be excellent.

As the epoxy silane-based compound, an epoxy silane commonly used as a coating agent for glass fiber may be used without particular limitation. For example, the epoxy silane-based compound may include one or more selected from the group consisting of 3-glycidyloxypropyltrimethoxysilane, 3-glycidyloxypropyltriethoxysilane, 3-glycidyloxypropyl(dimethoxy)methylsilane, and 2-(3,4-epoxycyclohexyl)ethyltrimethoxysilane. In this case, mechanical properties, heat resistance, and the surface properties of an injection product may be excellent.

As the glass fiber (C), glass fiber commonly used in the art may be used as long as the glass fiber follows the definition of the present invention.

### D) Liquid phosphorus-based flame retardant

For example, based on a total weight of the polycarbonate resin composition, the liquid phosphorus-based flame retardant (D) may be included in an amount of 2 to 12 % by weight, preferably 3 to 10 % by weight, more preferably 3 to 8 % by weight, still more preferably 4 to 7 % by weight. Within this range, impact resistance, heat resistance, and flame retardancy may be excellent, and a molded article having an aesthetically pleasing appearance may be obtained.

The liquid phosphorus-based flame retardant (D) maintains a liquid phase at room temperature, more specifically, at room temperature under atmospheric pressure. The liquid phosphorus-based flame retardant (D) plays a role in imparting flame retardancy to the resin composition according to the present invention and controlling melt index. Accordingly, even when the resin composition according to the present invention contains a minimum amount of flame retardant, flame-retardant properties may be stably implemented, productivity may be improved, and appearance characteristics and processability of the obtained molded article may be improved. In addition, when the liquid phosphorus-based flame retardant (D) is combined with the phosphazene compound (E) to be described later, flame retardancy of grade V-0 or higher may be secured, and impact resistance and heat resistance may be further improved through a synergistic effect.

In the present disclosure, room temperature may be at any point in the range of 20 ± 5 °C.

For example, the liquid phosphorus-based flame retardant (D) may include one or more selected from the group consisting of bisphenol-A bis(diphenyl phosphate) (BPADP), triphenyl phosphate (TPP), and resorcinol bis(diphenyl phosphate) (RDP), preferably bisphenol-A bis(diphenyl phosphate). In this case, impact resistance and heat resistance may be excellent, and flame retardancy may be secured.

### E) Phosphazene compound

For example, based on a total weight of the polycarbonate resin composition, the phosphazene compound (E) may be included in an amount of 1 to 7 % by weight, preferably 2 to 6 % by weight, more preferably 2 to 5 % by weight, still more preferably 3 to 4 % by weight. Within this range, by combining with the liquid phosphorus-based flame retardant (D), flame retardancy may be secured, and impact resistance and heat resistance may be further improved.

For example, the phosphazene compound (E) is an organic compound having a molecular bond of -P=N-. Preferably, the phosphazene compound (E) may include one or more selected from the group consisting of a cyclic phosphazene compound, an acyclic phosphazene compound, and a cross-linked phosphazene compound, more preferably a cyclic phosphazene compound. In this case, flame retardancy and mechanical properties may be excellent.

The cyclic phosphazene compound may be preferably a compound represented by Chemical Formula 5 below.

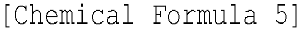

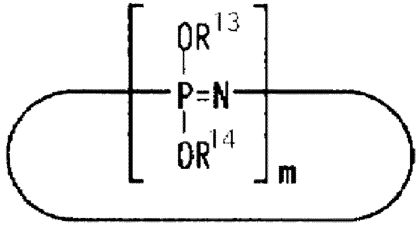

In Chemical Formula 5, m is an integer from 3 to 25, and R¹³ and R¹⁴ are the same or different and represent an aryl group or an alkylaryl group.

In Chemical Formula 5, m is preferably an integer from 3 to 5.

Preferably, the cyclic phosphazene compound represented by Chemical Formula 5 may be a cyclic phenoxyphosphazene in which R¹³ and R¹⁴ are phenyl groups. More preferably, the cyclic phosphazene compound may include one or more selected from the group consisting of phenoxycyclotriphosphazene, octaphenoxycyclotetraphosphazene, and decaphenoxycyclopentaphosphazene.

The acyclic phosphazene compound may be preferably a compound represented by Chemical Formula 6 below.

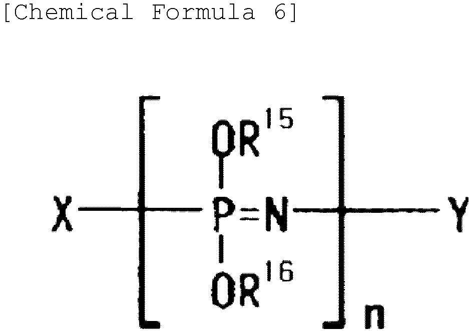

In Chemical Formula 6, n is an integer from 3 to 10, 000, X represents a -N=P(OR¹⁵)₃ group or a -N=P(O)OR¹⁵ group, and Y represents a -P(OR¹⁶)₄ group or a -P(O)(OR¹⁶)₂ group. R¹⁵ and R¹⁶ are the same or different and represent an aryl group or an alkylaryl group.

In Chemical Formula 6, n is preferably an integer from 3 to 100, more preferably an integer from 3 to 25.

The acyclic phosphazene compound represented by Chemical Formula 6 is preferably an acyclic phenoxyphosphazene in which R¹⁵ and R¹⁶ are phenyl groups.

For example, the cross-linked phosphazene compound may be obtained by crosslinking one or more phosphazene compounds selected from the group consisting of a cyclic phosphazene compound and an acyclic phosphazene compound with a crosslinking group represented by Chemical Formula 7 below.

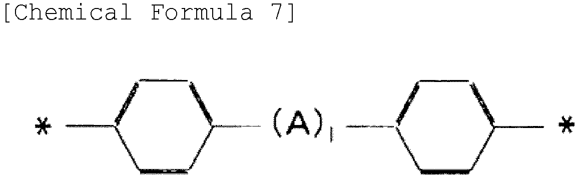

In Chemical Formula 7, A is -C(CH₃)₂-, -SO₂-, -S-, or -O-, and I is an integer of 0 or 1.

In Chemical Formula 7, the marks *- and -* do not indicate that CH₃ is omitted, but are marked to clearly indicate a bond.

Preferably, the cross-linked phosphazene compound may be a cross-linked phenoxyphosphazene compound obtained by crosslinking a cyclic phenoxyphosphazene compound in which R¹³ and R¹⁴ are phenyl groups in Chemical Formula 5 with the crosslinking group represented by Chemical Formula 7, a cross-linked phenoxyphosphazene compound obtained by crosslinking an acyclic phenoxyphosphazene compound in which R¹⁵ and R¹⁶ are phenyl groups in Chemical Formula 6 with the crosslinking group represented by Chemical Formula 7, or a mixture thereof, more preferably a cross-linked phenoxyphosphazene compound obtained by crosslinking a cyclic phenoxyphosphazene compound with the crosslinking group represented by Chemical Formula 7.

When the liquid phosphorus-based flame retardant (D) is combined with the phosphazene compound (E), due to the synergistic effect thereof, flame retardancy of grade V-0 or higher may be implemented, and impact resistance and heat resistance may be greatly improved.

For example, the liquid phosphorus-based flame retardant (D) may be included in a greater amount than the phosphazene compound (E). In this case, excellent flame retardancy may be achieved by using a small amount of flame retardant.

For example, the weight ratio (D:E) of the liquid phosphorus-based flame retardant (D) to the phosphazene compound (E) may be 1.2:1 to 3.0:1, preferably 1.2:1 to 2.7:1, more preferably 1.2:1 to 2.4:1, still more preferably 1.2:1 to 2.2:1, still more preferably 1.3:1 to 2.1:1, still more preferably 1.5:1 to 2.1:1, still more preferably 1.7:1 to 2.1:1. Within this range, excellent flame retardancy may be achieved by using a small amount of flame retardant, and impact resistance and heat resistance may be excellent.

For example, based on a total weight of the polycarbonate resin composition, a total weight of the liquid phosphorus-based flame retardant (D) and the phosphazene compound (E) may be 4 to 14 % by weight, preferably 5 to 13 % by weight, more preferably 6 to 12 % by weight, still more preferably 7 to 11 % by weight. Within this range, flame retardancy, impact resistance, and heat resistance may be significantly improved.

For example, the polycarbonate resin composition may be a core-shell structured impact modifier-free composition. In this case, by combining the liquid phosphorus-based flame retardant (D) with the phosphazene compound (E), impact resistance and heat resistance may be excellent, and flame retardancy may be further improved. For example, the core-shell structured impact modifier may be a core-shell structured impact modifier including methacrylate-butadiene rubber.

In the present disclosure, the term "core-shell structured impact modifier-free" means that a core-shell structured impact modifier is not intentionally added when preparing a polycarbonate resin composition.

For example, the polycarbonate resin composition may include one or more additives selected from the group consisting of a heat stabilizer, a flame retardant aid, a lubricant, a processing aid, a plasticizer, a coupling agent, a light stabilizer, a release agent, a dispersant, an anti-dripping agent, a weathering stabilizer, an antioxidant, a compatibilizer, a pigment, a dye, an antistatic agent, an anti-wear agent, a filler, and an antibacterial agent. In this case, required physical properties may be well implemented without deteriorating the inherent physical properties of the polycarbonate resin composition of the present invention.

Based on 100 parts by weight in total of the polycarbonate resin composition, each of the additives may be included in an amount of 0.01 to 20 parts by weight, preferably 0.05 to 10 parts by weight, more preferably 0.1 to 5 parts by weight. In this case, required physical properties may be well implemented without deteriorating the inherent physical properties of the polycarbonate resin composition of the present invention.

For example, the heat stabilizer may include one or more selected from the group consisting of a hindered phenol-based heat stabilizer, a diphenyl amine-based heat stabilizer, a sulfur-based heat stabilizer, and a phosphorus-based heat stabilizer, preferably a hindered phenol-based heat stabilizer, a phosphorus-based heat stabilizer, or a mixture thereof. In this case, oxidation by heat may be prevented during an extrusion process, and thus mechanical properties may be excellent.

For example, the hindered phenol-based heat stabilizer may be pentaerythritol tetrakis[3-(3,5-di-t-butyl-4-hydroxyphenyl)propionate], 1,3,5-trimethyl-2,4,6-tris(3,5-di-t-butyl-4-hydroxybenzyl)benzene, or a mixture thereof, preferably pentaerythritol tetrakis[3-(3,5-di-t-butyl-4-hydroxyphenyl)propionate].

For example, the diphenyl amine-based heat stabilizer may include one or more selected from the group consisting of phenylnaphthylamine, 4,4'-dimethoxy diphenyl amine, 4,4'-bis(α,α-dimethylbenzyl) diphenyl amine, and 4-isopropoxy diphenyl amine.

For example, the sulfur-based heat stabilizer may include one or more selected from the group consisting of dilauryl-3,3'-thiodipropionic acid ester, dimyristyl-3,3'-thiodipropionic acid ester, distearyl-3,3'-thiodipropionic acid ester, laurylstearyl-3,3'-thiodipropionic acid ester, and pentaerythritol tetrakis(3-laurylthio propion ester), without being limited thereto.

For example, the phosphorus-based heat stabilizer may include one or more selected from the group consisting of tris(mixed, mono, and dinonylphenyl) phosphite, tris(2,3-di-t-butylphenyl) phosphite, 4,4'-butylidene bis(3-methyl-6-t-butylphenyl-di-tridecyl) phosphite, 1,1,3-tris(2-methyl-4-di-tridecyl phosphite-5-t-butylphenyl) butane, bis(2,4-di-t-butylphenyl) pentaerythritol-di-phosphite, tetrakis(2,4-di-t-butylphenyl)-4,4'-biphenylene diphosphonate, bis(2,6-di-t-butyl-4-methylphenyl) pentaerythritol-di-phosphite, 2,2'-ethylidene bis(4,6-di-t-butylphenyl)-2-ethylhexyl-phosphite, bis(2,4,6-di-t-butylphenyl) pentaerythritol-di-phosphite, triphenylphosphite, diphenyldecyl phosphite, didecyl phenyl phosphite, tridecyl phosphite, trioctyl phosphite, tridodecyl phosphite, trioctadecyl phosphite, tris nonylphenyl phosphite, and tridodecyl trithiophosphite, preferably bis(2,6-di-t-butyl-4-methylphenyl) pentaerythritol-di-phosphite, without being limited thereto.

For example, the lubricant may include one or more selected from the group consisting of modified montanic acid wax, a long chain ester of pentaerythritol, and a fatty acid ester of neopentylpolyol.

For example, the UV absorber may include one or more selected from the group consisting of a triazine-based UV absorber, a benzophenone-based UV absorber, a benzotriazole-based UV absorber, a benzoate-based UV absorber, and a cyanoacrylate-based UV absorber.

For example, the triazine-based UV absorber may include one or more selected from the group consisting of 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, and 2,4-diphenyl-6-(2-hydroxy-4-benzyloxyphenyl)-1,3,5-triazine.

For example, the benzophenone-based UV absorber may include one or more selected from the group consisting of 2,4-dihydroxy-benzophenone, 2-hydroxy-4-methoxybenzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, and 2,2',4,4'-tetrahydroxy-benzophenone.

For example, the benzotriazole-based UV absorber may include one or more selected from the group consisting of 2-(2'-hydroxy-5-methylphenyl)benzotriazole, 2-(2'-hydroxy-3',5'-di-t-butylphenyl)benzotriazole, 2-(2'-hydroxy-3'-t-butyl-5'-methylphenyl)benzotriazole, 2-(2'-hydroxy5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidomethyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, (2-(2'-hydroxy-3',5'-di-tert-amylphenyl)-5-chlorobenzotriazole, 2-(2'-hydroxy-3',5'-di-tert-butylphenyl)-5-chlorobenzotriazole, and (2-(2'-hydroxy-3',5'-di-tert-amylphenyl)-5-chlorobenzotriazole.

For example, the cyanoacrylate-based UV absorber may be 2'-ethylhexyl-2-cyano-3,3-diphenylacrylate, ethyl-2-cyano-3-(3',4'-methylenedioxyphenyl)acrylate, or a mixture thereof.

### Polycarbonate resin composition

The polycarbonate resin composition may have an Izod impact strength of preferably 11 kgf·cm/cm or more, more preferably 13 kgf·cm/cm or more, still more preferably 15 kgf·cm/cm or more, still more preferably 15 to 25 kgf·cm/cm as measured at room temperature using a notched specimen having a thickness of 3.2 mm according to ASTM D256. Within this range, physical property balance may be excellent.

The polycarbonate resin composition may have a heat deflection temperature of preferably 97 °C or higher, more preferably 105 °C or higher, still more preferably 110 °C or higher, still more preferably 113 °C or higher, still more preferably 115 °C or higher, still more preferably 115 to 125 °C as measured under a load of 18.6 kg using a specimen having a thickness of 6.4 mm according to ASTM D648. Within this range, physical property balance may be excellent.

The polycarbonate resin composition may preferably have a flame retardancy of grade V-0 or higher as measured using a specimen having a thickness of 0.8 mm according to the UL94 V test (vertical burning test). Within this range, impact resistance and heat resistance may be excellent, and high flame retardancy may be achieved.

### Method of preparing polycarbonate resin composition

A method of preparing the polycarbonate resin composition of the present invention includes a step of kneading and extruding 20 to 75 % by weight of a polycarbonate (A-1) having a melt index (300 °C, 1.2 kg) of 15 to 25 g/10 min, 0 to 50 % by weight of a polycarbonate (A-2) having a melt index (300 °C, 1.2 kg) of 5 g/10 min or more and less than 15 g/10 min, 5 to 25 % by weight of a polysiloxane-polycarbonate copolymer (B), 5 to 45 % by weight of glass fiber (C), 2 to 12 % by weight of a liquid phosphorus-based flame retardant (D), and 1 to 7 % by weight of a phosphazene compound (E) at 200 to 350 °C and 100 to 400 rpm. In this case, impact resistance, heat resistance, and flame retardancy may be excellent.

The method of preparing the polycarbonate resin composition shares all the technical characteristics of the above-described polycarbonate resin composition. Accordingly, repeated description thereof will be omitted.

For example, the kneading and extrusion may be performed using a single-screw extruder, a twin-screw extruder, or a Banbury mixer. In this case, the composition may be uniformly dispersed, and thus compatibility may be excellent.

For example, the kneading and extrusion may be performed at a barrel temperature of 200 to 350 °C, preferably 220 to 330 °C, more preferably 240 to 310 °C. In this case, a throughput per unit time may be appropriate, melt-kneading may be sufficiently performed, and thermal decomposition of the resin component may be prevented.

For example, the kneading and extruding may be performed at a screw rotation rate of 100 to 400 rpm, preferably 150 to 350 rpm, more preferably 200 to 300 rpm. In this case, a throughput per unit time may be appropriate, and thus process efficiency may be excellent. Also, excessive cutting of glass fiber may be prevented.

### Molded article

A molded article of the present invention includes the polycarbonate resin composition of the present invention. In this case, since a post-consumer recycled polycarbonate is included in a high content, eco-friendliness may be achieved, and impact resistance, heat resistance, and flame retardancy may be excellent.

For example, the molded article may be an electrical and electronic part, an automotive part, or an industrial material.

A method of manufacturing the molded article of the present invention preferably includes a step of kneading and extruding 20 to 75 % by weight of a polycarbonate (A-1) having a melt index (300 °C, 1.2 kg) of 15 to 25 g/10 min, 0 to 50 % by weight of a polycarbonate (A-2) having a melt index (300 °C, 1.2 kg) of 5 g/10 min or more and less than 15 g/10 min, 5 to 25 % by weight of a polysiloxane-polycarbonate copolymer (B), 5 to 45 % by weight of glass fiber (C), 2 to 12 % by weight of a liquid phosphorus-based flame retardant (D), and 1 to 7 % by weight of a phosphazene compound (E) at 200 to 350 °C and 100 to 400 rpm to obtain pellets and a step of injecting the obtained pellets to manufacture a molded article. In this case, since a post-consumer recycled polycarbonate is included in a high content, eco-friendliness may be achieved, and impact resistance, heat resistance, and flame retardancy may be excellent.

For example, the prepared pellets may be subjected to injection processing after being sufficiently dried using a dehumidifying dryer or a hot air dryer.

In the present disclosure, the total weight of the polycarbonate resin composition means a total weight of the polycarbonate (A-1) having a melt index (300 °C, 1.2 kg) of 15 to 25 g/10 min, the polysiloxane-polycarbonate copolymer (B), the glass fiber (C), the liquid phosphorus-based flame retardant (D), and the phosphazene compound (E). When the polycarbonate (A-2) having a melt index (300 °C, 1.2 kg) of 5 g/10 min or more and greater than 15 g/10 min is included, the total weight of the polycarbonate resin composition means a total weight of the components (A-1), (A-2), (B), (C), (D), and (E).

A method of manufacturing a molded article may be used in the present invention without particular limitation as long as the method follows the definition of the present invention and conditions, methods, and devices commonly used in the art to which the present invention pertains are used.

In describing the polycarbonate resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

Materials used in Examples and Comparative Examples are as follows.
* A-1) Polycarbonate having a melt index (300 °C, 1.2 kg) of 20 g/10 min measured according to ASTM D1238: Post-consumer recycled polycarbonate (PCR-PC)
* A-2) Polycarbonate having a melt index (300 °C, 1.2 kg) of 10 g/10 min measured according to ASTM D1238: General polycarbonate (General PC; PC1300-10, LG Chemical Co.)
* B-1) Polysiloxane-polycarbonate copolymer (Si-PC): SPC8100-02 (Average size of polyorganosiloxane domains: 50 to 60 nm, LG Chemical Co.)
* B-2) Impact modifier having a core-shell structure (MBS): Impact modifier having a core-shell structure and containing methyl methacrylate-butadiene rubber (EM538, LG Chemical Co.)
* C) Glass fiber: Glass fiber (Average length: 3 mm, average transverse length of cross section: 28 pm, average longitudinal length of cross section: 7 µm) surface-treated with a silane-based compound
* D) Liquid phosphorus-based flame retardant (BPADP): Bisphenol-A bis(diphenyl phosphate) (FP600, ADEKA Co.)
* E) Phosphazene compound: Phenoxy phosphazene (HPC TP-JW01, Weihai Jinwei ChemIndustry Co.)

### [Examples]

According to the composition and contents described in Tables 1 to 3, the ingredients were uniformly mixed using a mixer. The mixture was melted and kneaded using a twin-screw extruder (screw diameter: 26 mm, L/D = 40), and then extruded at an extrusion temperature of 250 to 300 °C and a screw rotation rate of 200 rpm to obtain a polycarbonate resin composition in the form of pellets. The pellets were dried at 80 °C for 4 hours or more, and then injected using an injection molding machine (80MT, ENGEL Co.) at a nozzle temperature of 260 °C to obtain a specimen for measuring physical properties. After leaving the specimen for 48 hours or more, the physical properties of the specimen were measured.

**[Table 1]**

| Classification | Examples | | | | | | | | | |
|---|---|---|---|---|---|---|---|---|---|---|
| | 1 | 2 | 3 | 4 | 5 | 6 | 7 | 8 | 9 | 10 |
| A-1) PCR-PC | 30 | 30 | 30 | 30 | 71 | 30 | 30 | 30 | 30 | 30 |
| A-2) General PC | 43 | 42 | 37 | 41 | - | 10 | 10 | 5 | 43 | 43 |
| B-1) Si-PC | 10 | 10 | 15 | 10 | 10 | 10 | 10 | 15 | 10 | 10 |
| B-2) MBS | | | | | | | | | | |
| C) Glass fiber | 10 | 10 | 10 | 10 | 10 | 40 | 40 | 40 | 10 | 10 |
| D) BDADP | 4 | 5 | 5 | 6 | 5 | 7 | 6 | 6 | 3.5 | 5.5 |
| E) Phosphazene | 3 | 3 | 3 | 3 | 3 | 3 | 4 | 4 | 3.5 | 1.5 |

| Physical properties | | | | | | | | | | |
|---|---|---|---|---|---|---|---|---|---|---|
| Impact strength (kgf-cm/cm) | 18 | 16 | 17 | 13 | 15 | 14 | 14 | 16 | 18 | 15 |
| Flame retardancy | V-0 | V-0 | V-0 | V-0 | V-0 | V-0 | V-0 | V-0 | V-0∼ V-1 | V-0∼ V-1 |
| HDT (°C) | 118 | 116 | 114 | 113 | 117 | 97 | 98 | 98 | 119 | 118 |

**[Table 2]**

| Classif ication | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 | Compa rativ e Examp le 8 |
|---|---|---|---|---|---|---|---|---|
| A-1) PCR-PC | 30 | 30 | 30 | 30 | 30 | 30 | 30 | 30 |
| A-2) General PC | 52 | 50 | 50 | 60 | 19 | 18 | 8 | 52 |
| B-1) Si-PC | | | | | | | 10 | 1 |
| B-2) MBS | | 2 | 2 | | 3 | 2 | 2 | |
| C) Glass fiber | 10 | 10 | 10 | 10 | 40 | 40 | 40 | 10 |
| D) BDADP | 8 | 8 | 5 | | 8 | 7 | 10 | 4 |
| E) Phospha zene | | | 3 | | | 3 | | 3 |

| Physical properties | | | | | | | | |
|---|---|---|---|---|---|---|---|---|
| Impact strengt h (kgf·cm /cm) | 5 | 7 | 9 | 8 | 10 | 13 | 11 | 18 |
| Flame retarda ncy | V-0 | V-1 | V-1 | V-2 | V-1 | V-1 | V-1 | V-1 |
| HDT (°C) | 110 | 109 | 112 | 138 | 94 | 97 | 90 | 120 |

**[Table 3]**

| Classificat ion | Comparati ve Example 9 | Comparati ve Example 10 | Comparati ve Example 11 | Comparati ve Example 12 | Comparati ve Example 13 |
|---|---|---|---|---|---|
| A-1) PCR-PC | 30 | 30 | 30 | 30 | 30 |
| A-2) General PC | 23 | 52 | 3 | 45 | 34 |
| B-1) Si-PC | 30 | 10 | 10 | 10 | 10 |
| B-2) MBS | | | | | |
| C) Glass fiber | 10 | 1 | 50 | 10 | 10 |
| D) BDADP | 4 | 4 | 4 | 0 | 7 |
| E) | 3 | 3 | 3 | 5 | 9 |
| Phosphazene | | | | | |

| Physical properties | | | | | |
|---|---|---|---|---|---|
| Impact strength (kgf-cm/cm) | 10 | 60 | 15 | 17 | 10 |
| Flame retardancy | V-1 | V-1 | V-1 | V-NOT* | V-0 |
| HDT (°C) | 114 | 137 | 100 | 125 | 101 |

V-NOT*: V-NOT* indicates that evaluation of the flame retardancy of the specimen is impossible because the specimen does not meet the combustion standards based on the UL94 V test. That is, the burning time of the specimen was exceeded or the specimen was burnt out.

As shown in Tables 1 to 3, in the case of the polycarbonate resin compositions (Examples 1 to 10) of the present invention, compared to Comparative Examples 1 to 13, impact strength, flame retardancy, and heat deflection temperature were excellent. In addition, despite the high content of the PCR-PC (A-1), excellent impact strength, flame retardancy, and heat deflection temperature were exhibited, and an increase in a recycling rate was possible. In particular, in the case of Examples 1 to 8 in which the weight ratio (D:E) of the liquid phosphorus-based flame retardant (D) to the phosphazene compound (E) was 1.2:1 to 3.0:1, flame retardancy was further improved.

Specifically, Comparative Example 1 not including the Si-PC (B-1) and the phosphazene (E) exhibited very low impact strength. In the case of Comparative Example 2, which was different from Comparative Example 1 in that the MBS impact modifier (B-2) was included, impact strength increased slightly, but flame retardancy decreased.

In addition, in the case of Comparative Example 3 including the MBS impact modifier (B-2) without the Si-PC (B-1), flame retardancy and impact strength were reduced. In the case of Comparative Example 4 not including the BDADP (D) and the phosphazene (E), impact strength was low, and flame retardancy was very poor.

In addition, in the case of Comparative Example 5 including the MBS impact modifier (B-2) instead of the Si-PC (B-1) and using the BDADP alone, flame retardancy and heat deflection temperature were low. In the case of Comparative Example 6 including the MBS impact modifier (B-2) instead of the Si-PC (B-1), flame retardancy and heat deflection temperature were low. In the case of Comparative Example 7 using the BDADP alone, flame retardancy and heat deflection temperature deteriorated.

In addition, in the case of Comparative Examples 8 and 9 including the Si-PC (B-1) in an amount outside of the range of the present invention, flame retardancy deteriorated. In the case of Comparative Example 9, impact strength was also reduced.

In addition, Comparative Examples 10 and 11 including the glass fiber (C) in an amount outside of the range of the present invention exhibited poor flame retardancy.

In addition, Comparative Example 12 not including the BDADP (D) exhibited very poor flame retardancy. Thus, measurement of flame retardancy was impossible. Comparative Example 13 including the phosphazene (E) in an amount exceeding the range of the present invention exhibited low impact strength.

In conclusion, in the case of the polycarbonate resin composition according to including the post-consumer recycled polycarbonate (A-1), the polysiloxane-polycarbonate copolymer (B), the glass fiber (C), the liquid phosphorus-based flame retardant (D), and the phosphazene compound (E) in a predetermined content ratio, impact resistance, heat resistance, and flame retardancy were excellent. In addition, despite the high content of the post-consumer recycled polycarbonate (A-1), impact resistance, heat resistance, and flame retardancy were improved.

## Claims

1. A polycarbonate resin composition, comprising:
20 to 75 % by weight of a polycarbonate (A) having a melt index (300 °C, 1.2 kg) of 15 to 25 g/10 min;
5 to 25 % by weight of a polysiloxane-polycarbonate copolymer (B);
5 to 45 % by weight of glass fiber (C);
2 to 12 % by weight of a liquid phosphorus-based flame retardant (D); and
1 to 7 % by weight of a phosphazene compound (E).

2. The polycarbonate resin composition according to claim 1, wherein the polycarbonate resin composition comprises 1 to 50 % by weight of a polycarbonate (A-2) having a melt index (300 °C, 1.2 kg) of 5 g/10 min or more and less than 15 g/10 min.

3. The polycarbonate resin composition according to claim 1, wherein the polycarbonate (A) is a post-consumer recycled polycarbonate.

4. The polycarbonate resin composition according to claim 1, wherein the polysiloxane-polycarbonate copolymer (B) comprises an aromatic diol compound, a carbonate precursor, and a polysiloxane.

5. The polycarbonate resin composition according to claim 1, wherein the polysiloxane-polycarbonate copolymer (B) comprises an aromatic polycarbonate-based first repeat unit represented by Chemical Formula 1 below; and an aromatic polycarbonate-based second repeat unit represented by Chemical Formula 2 below and having one or more siloxane bonds, or comprises a repeat unit represented by Chemical Formula 3 below. 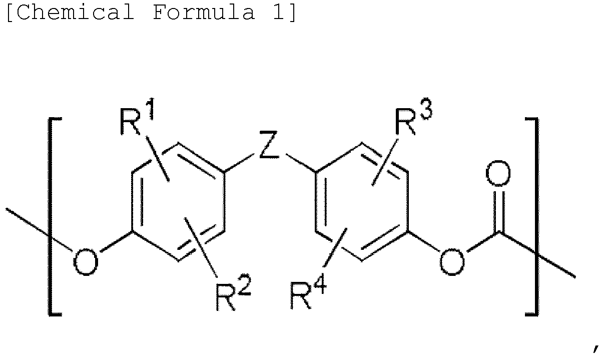
wherein R¹ to R⁴ are each independently selected from hydrogen; C₁₋₁₀ alkyl; C₁₋₁₀ alkoxy; and a halogen, and Z is selected from unsubstituted C₁₋₁₀ alkylene or C₁₋₁₀ alkylene substituted with C₁₋₆ alkyl or C₆₋₂₀ aryl; unsubstituted C₃₋₁₅ cycloalkylene or C₃₋₁₅ cycloalkylene substituted with C₁₋₁₀ alkyl; oxygen; S; SO; SO₂; and CO. 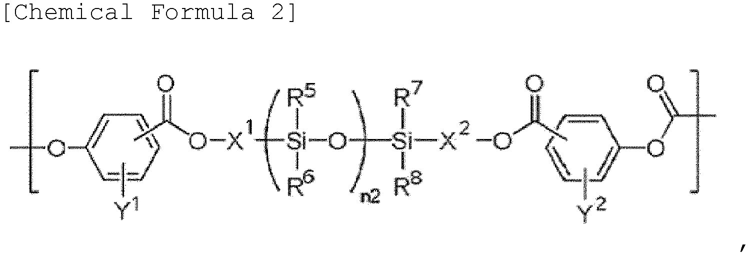
wherein X¹ and X² are each independently C₁₋₁₀ alkylene, Y¹ and Y² are each independently selected from hydrogen; C₁₋₆ alkyl; a halogen; a hydroxy group; a C₁₋₆ alkoxy group; and a C₆₋₂₀ aryl group, R⁵ to R⁸ are each independently selected from hydrogen; an unsubstituted C₁₋₁₀ alkoxy group or a C₁₋₁₀ alkoxy group substituted with oxiranyl; C₁₋₁₅ alkyl substituted with C₆₋₂₀ aryl; a halogen; C₁₋₁₀ alkoxy; allyl; C₁₋₁₀ haloalkyl; and C₆₋₂₀ aryl, and n2 is an integer from 30 to 120. 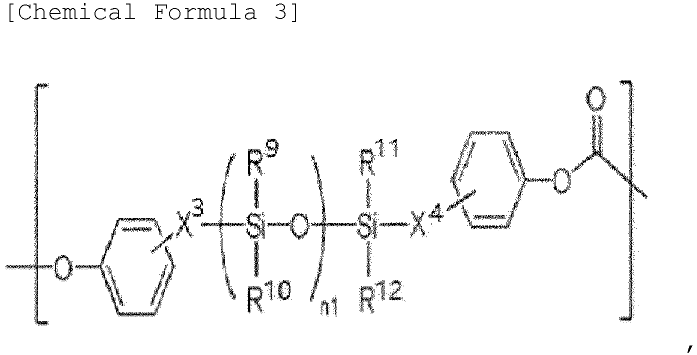
wherein X³ and X⁴ are each independently C₁₋₁₀ alkylene, R⁹ to R¹² are each independently hydrogen; unsubstituted C₁₋₁₀ alkoxy or C₁₋₁₀ alkoxy substituted with oxiranyl; C₁₋₁₅ alkyl substituted with C₆₋₂₀ aryl; a halogen; C₁₋₁₀ alkoxy; allyl; C₁₋₁₀ haloalkyl; or C₆₋₂₀ aryl, and n1 is an integer from 30 to 120.

6. The polycarbonate resin composition according to claim 1, wherein the polysiloxane-polycarbonate copolymer (B) has siloxane domains having an average size of 20 nm or more.

7. The polycarbonate resin composition according to claim 1, wherein the glass fiber (C) has an average length of 1 to 15 mm, and a cross section thereof has an average transverse length of 15 to 45 µm and an average longitudinal length of 2 to 15 µm.

8. The polycarbonate resin composition according to claim 1, wherein the liquid phosphorus-based flame retardant (D) comprises one or more selected from the group consisting of bisphenol-A bis(diphenyl phosphate), triphenyl phosphate, and resorcinol bis(diphenyl phosphate).

9. The polycarbonate resin composition according to claim 1, wherein the phosphazene compound (E) comprises one or more selected from the group consisting of a cyclic phosphazene compound, an acyclic phosphazene compound, and a cross-linked phosphazene compound.

10. The polycarbonate resin composition according to claim 1, wherein a weight ratio (D:E) of the liquid phosphorus-based flame retardant (D) to the phosphazene compound (E) is 1.2:1 to 3.0:1.

11. The polycarbonate resin composition according to claim 1, wherein the polycarbonate resin composition has an Izod impact strength of 11 kgf-cm/cm or more as measured at room temperature using a notched specimen having a thickness of 3.2 mm according to ASTM D256.

12. The polycarbonate resin composition according to claim 1, wherein the polycarbonate resin composition has a heat deflection temperature of 97 °C or higher as measured under a load of 18.6 kg using a specimen having a thickness of 6.4 mm according to ASTM D648.

13. The polycarbonate resin composition according to claim 1, wherein the polycarbonate resin composition has a flame retardancy of grade V-0 or higher as measured using a specimen having a thickness of 0.8 mm according to a UL94 V test.

14. A method of preparing a polycarbonate resin composition, comprising kneading and extruding 20 to 75 % by weight of a polycarbonate (A) having a melt index (300 °C, 1.2 kg) of 15 to 25 g/10 min, 0 to 50 % by weight of a polycarbonate (A-2) having a melt index (300 °C, 1.2 kg) of 5 g/10 min or more and less than 15 g/10 min, 5 to 25 % by weight of a polysiloxane-polycarbonate copolymer (B), 5 to 45 % by weight of glass fiber (C), 2 to 12 % by weight of a liquid phosphorus-based flame retardant (D), and 1 to 7 % by weight of a phosphazene compound (E) at 200 to 350 °C and 100 to 400 rpm.

15. A molded article, comprising the polycarbonate resin composition according to any one of claims 1 to 13.
